(19) **Europäisches Patentamt**
**European Patent Office**
**Office européen des brevets**

(11) **EP 4 614 391 A1**

(12) **EUROPEAN PATENT APPLICATION**

(43) Date of publication:
**10.09.2025 Bulletin 2025/37**

(21) Application number: **24219325.8**

(22) Date of filing: **12.12.2024**

(51) International Patent Classification (IPC):
**G06N 3/045** (2023.01)  **G06N 3/092** (2023.01)
**G06N 5/022** (2023.01)  **G06N 5/045** (2023.01)
**G06N 7/01** (2023.01)  **G06N 20/00** (2019.01)

(52) Cooperative Patent Classification (CPC):
**G06N 5/022; G06N 3/045; G06N 3/092;
G06N 5/045; G06N 7/01; G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.03.2024 US 202418599880**

(71) Applicant: **SAP SE
69190 Walldorf (DE)**

(72) Inventors:
• **BOUADI, Mohamed**
  **69190 Walldorf (DE)**
• **ALAVI, Arta**
  **69190 Walldorf (DE)**
• **BENBERNOU, Salima**
  **69190 Walldorf (DE)**
• **OUZIRI, Mourad**
  **69190 Walldorf (DE)**

(74) Representative: **Müller-Boré & Partner
Patentanwälte PartG mbB
Friedenheimer Brücke 21
80639 München (DE)**

(54) **FEATURE ENGINEERING BASED ON FEATURE INTERPRETABILITY**

(57)    Systems and methods include generation of a first set of features based on a second set of features and a learning network, determination of an interpretability value for each of the first set of features, determination of a performance of a model trained using the first set of features, determination of a reward based on the performance and the interpretability values, and generation of a third set of features based on the first set of features, the learning network and the reward.

FIG. 1

**Description**

BACKGROUND

Organizations have long employed computing systems to manage and store operational data. The volume of such data has grown exponentially over time, resulting in continuous development of new and more-efficient systems for handling such data. Systems to facilitate understanding and analysis of large data sets have similarly evolved.

Over the past decade, organizations have increasingly used modeling applications to predict future events based on stored data. These applications have been used to solve difficult problems and uncover new opportunities across a variety of domains. A modeling application typically provides tools for defining and training a machine learning (ML) algorithm which infers a desired output based on specified known inputs.

Unfortunately, defining and training an ML algorithm using existing tools is quite difficult for non-experts in the field. Generally, it is required to gather suitable training data, define model inputs (i.e., feature selection) from the training data, select a model architecture, train the model, and deploy the model. Each of the foregoing steps is replete with corresponding decisions and uncertainties.

For example, the goal of feature selection is to select features which result in an efficient and accurate ML algorithm. The performance of a particular set of features may be validated by prior knowledge or by tests using synthetic and/or actual data sets. However, selecting an optimal set of features presents an intractable computational problem.

In particular, the number of possible features that can be constructed is unlimited. Moreover, transformations can be composed and applied recursively to the features generated by previous transformations. In order to confirm whether a newly-composed feature is relevant, a new model including the feature is trained and evaluated. This validation is costly and impractical to perform for each newly-constructed feature.

In view of the foregoing, feature selection (i.e., feature engineering) is primarily performed manually by a data scientist. The data scientist uses intuition, a background in data mining and statistics, and domain knowledge to extract useful features from stored data, and to refine the features through trial and error by training corresponding models and observing their relative performance. In view of the inordinate time and expense of manual feature selection, automated feature selection systems have been proposed to perform portions of the feature engineering process using, for example, a search framework or a correlation model.

Existing manual and automated feature selection systems attempt to generate features which are statistically important to the desired output of the algorithm. It is also desirable to generate features which are interpretable by domain experts. In this regard, the interpretability of ML algorithms strongly depends on the interpretability of the input features. Moreover, input features which are interpretable by domain experts enhance trust associated with the output of the ML algorithm. Improved automation of the feature engineering process to efficiently generate effective and interpretable input features is desired.

BRIEF DESCRIPTION OF THE DRAWINGS

FIG. 1 is a block diagram of an architecture to generate interpretable and statistically-important features according to some embodiments.

FIG. 2 is a flow diagram of a process to generate interpretable and statistically-important features according to some embodiments.

FIG. 3 illustrates logical entities of a portion of a knowledge graph according to some embodiments.

FIG. 4 illustrates a sample TBox and Abox of a knowledge graph according to some embodiments.

FIG. 5 illustrates sample rules of a knowledge graph a decomposition graph according to some embodiments.

FIG. 6 is a detailed block diagram of an architecture to generate interpretable and statistically-important features according to some embodiments.

FIG. 7 illustrates logical entities of a portion of a decomposition graph according to some embodiments.

FIG. 8 is a block diagram of an architecture to train a model to output a target based on a set of features and training data.

FIG. 9 is a block diagram of an architecture to determine model performance based on a set of features and test data.

FIG. 10 is an outward view of an interface presenting selected input features of a trained model according to some embodiments.

FIG. 11 illustrates a system to provide trained models to applications according to some embodiments.

FIG. 12 is a block diagram of a hardware system for providing trained models according to some embodiments.

DETAILED DESCRIPTION

The following description is provided to enable any person in the art to make and use the described embodiments. Various modifications, however, will be readily-apparent to those in the art.

Some embodiments provide a scalable solution to automate feature engineering that simultaneously attempts to maximize model performance and feature interpretability. Embodiments may advantageously allow biasing of the feature generation process toward features which enhance model performance or toward features which enhance overall feature interpretability.

Briefly, a set of features are derived from original features of a dataset using a knowledge graph of domain knowledge. The derived features are therefore interpretable in view of the domain knowledge. Next, an autonomous agent generates features based on the original features and the set of features dataset. An interpretability score is assigned to each of the newly-generated features using a novel metric and a decomposition graph including transformations used to generate the features. A model is then trained based on all features, and a reward is determined based on the performance of the model and the interpretability of the features generated by the autonomous agent. The reward is used to update the agent and the process repeats with all current features being input to the autonomous agent.

Interpretability, as discussed herein, relates to the intellectual effort required by a domain expert to understand a feature. In other words, interpretability is inversely related to the amount of effort required to map a feature to a specific domain of interest so as to facilitate understanding of the data underlying the feature.

In contrast to interpretability as, the explainability of a feature may consist of the minimal set of elements of a domain ontology (i.e., axioms and assertions) that led to the inferred result. An explanation of an interpretable feature $f_i$ from the knowledge base $KB$, denoted by $KB \vDash f_i$, is given by the trace $KB' \subseteq KB$, such that $KB' \vDash f_i$ and there is no other knowledge set $KB'' \subseteq KB'$ so that $KB'' \vDash f_i$.

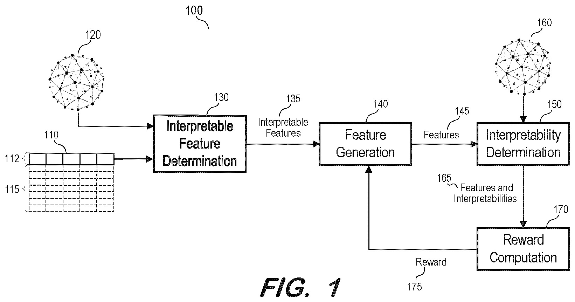

FIG. 1 is a block diagram of architecture 100 to generate interpretable and statistically important features according to some embodiments. All components illustrated herein may be implemented using any suitable combination of computing hardware and/or software that is or becomes known. In some embodiments, two or more components are implemented by a single computing device or may be co-located. One or more components may be implemented as a cloud service (e.g., Software-as-a-Service, Platform-as-a-Service). A cloud-based implementation of any components may apportion computing resources elastically according to demand, need, price, and/or any other metric.

Generation of features according to some embodiments may address a predictive modeling problem consisting of a dataset, $D$, with raw features, $F^r = \{f_1, .., f_n\}$, and a target vector, $y$, a set of transformations, $T = \{t_1, .., t_k\}$, an applicable learning algorithm $L$, a measure of model performance $m$ (e.g., precision, recall), and an interpretability function $I_{DG}: Dom^F \rightarrow [0,1]$, where $Dom^F$ is the set of all possible features. $I_{DG}$ returns an interpretability score of a feature $f \in Dom^F$.

$P_L{}^m(F, y)$ is defined as model performance using measure $m$ for the model constructed on given data with algorithm $L$. Algorithm $L$ may comprise a linear regression algorithm, a classification algorithm, or any other suitable algorithm which accepts a training set and a validation set as input and produces a function that returns the predicted labels $y$ given the input sets, and which might or might not be implemented using a neural network.

Embodiments may therefore be used to determine a set of features, $F^*$, that maximizes both the performance of the given algorithm $L$ and the interpretability $I$ of the selected features in view of an appropriate trade-off therebetween for a given task, i.e.,

$$F^* = arg\ max_{F \subseteq F^r \cup F^g} \mathcal{F}(P_L^m(F), I_{DG}(F))$$

s. $t.$

$$I_{DG}(F) = \sum_{f \in F} I_{DG}(f),$$

where $\mathcal{F}$ represents a bi-objective function that assesses both model performance and feature interpretability, and $F^g \subseteq Dom^F$ denotes the set of the generated features.

To facilitate solving of this bi-objective optimization problem, the two objectives may be combined into one objective using a weighted linear combination, i.e.,

$$F^* = arg\ max_{F \subseteq F^r \cup F^g}(\lambda P_L^m(F) + (1 - \lambda)I_{KG}(F))$$

*S. t.*

$$I_{DG}(F) = \sum_{f \in F} I_{DG}(f)$$

$$\lambda \in [0,1],$$

where $\lambda$ is a hyper-parameter to indicating the relative weight of feature interpretability and model performance to the determination of $F^*$.

Database table 110 may comprise any set of data values that is or becomes known. Table 110 includes five columns of data 115, where each column includes data values corresponding to one of five features 112. In some embodiments, table 110 includes columns in addition to those associated with features 112. According to some embodiments, features 112 are referred to as "raw" features because the data values associated therewith are identical to the data values of the corresponding columns of table 110. As will be described below, other features may be generated based on one or more raw features. The data values associated with such other features are not natively stored in table 110 but are instead generated from the native data values.

According to the present example, features 112 are input to interpretable feature determination component 130. For example, text names associated with each feature 112 are input to feature determination component 130. The text names may be identical to the column names of the columns of table 110 associated with each feature 112.

Interpretable feature determination component 130 generates new interpretable features 135 based on features 112 and knowledge graph 120. Generally, component 130 employs logical reasoning techniques to infer relationships within the knowledge graph 120 and to derive new domain-specific concepts (i.e., interpretable features 135) therefrom. Since knowledge graph 120 represents domain knowledge, features derived therefrom are considered interpretable to domain experts. Details of knowledge graph 120 and the use thereof to generate interpretable features 135 according to some embodiments will be provided below.

Feature generation component 140 operates to generate features 145 based on interpretable features 135 received from component 130. Feature generation component 140 may comprise any suitable system for generating one or more features based on a received feature vector and a reward computed based on prior-generated features. Features 145 may include interpretable features 135 and features newly-generated by feature generation component 140. According to some embodiments, feature generation component 140 uses knowledge graph 120 to identify and prune non-interpretable ones of the generated features prior to transmitting features 145 to interpretability determination component 150. Examples of feature generation component 140 and operation thereof according to some embodiments are provided below.

Interpretability determination component 150 receives features 145 from feature generation component 140 and determines a value of an interpretability metric (i.e., an interpretability) for each of features 145 based on decomposition graph 160. Decomposition graph 160 describes how features are generated, the transformations are used by feature generation component 140 and their relationships with real-world entities. Examples of decomposition graph 160 and determination of a value of an interpretability metric for a feature based on decomposition graph 160 will be provided below.

Reward computation component 170 receives features 145 and their interpretabilities 165 and determines reward 175 based thereon. Reward computation component 170 determines reward 175 based on the interpretability of features 145 and based on the performance of a model which is trained using features 145. The model may comprise the above-mentioned algorithm *L* and the performance of the algorithm may be determined by evaluating measure *m* after training the algorithm using features 145 and corresponding training data as is known in the art.

Reward 175 is returned to feature generation component 140, which generates new features based on reward 175 and prior features 145 (i.e., interpretable features 135 and all interpretable features previously-generated by feature generation component 140). The components of architecture 100 may then continue to operate as described above until convergence of the iterations or until a time limit or other threshold is reached such as but not limited to an overall number of interpretable features generated by architecture 100, a performance of a trained algorithm using these generated interpretable features, a number of iterations performed by architecture 100, and any other suitable metric.

According to some embodiments (e.g., where 100% feature interpretability is required), features may simply be generated using knowledge graph 120 and component 130 as described above, without use of components 140, 150, and 170. Conversely, in a case where features 112 do not correspond well to the entities of knowledge graph 120 (e.g., where knowledge graph 120 is incomplete or non-existent) and the relevant domain knowledge is therefore limited, knowledge graph 120 and component 130 may be removed from architecture 100 such that feature generation component 140 generates features 145 directly from features 112 of table 110 and components 150 and 170 then operate as described above.

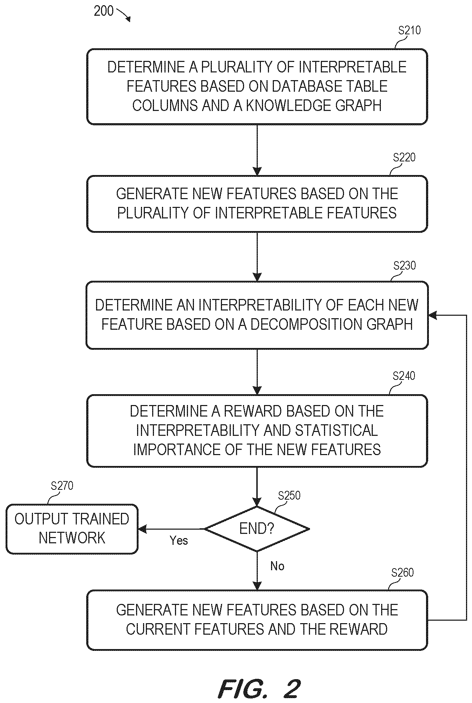

FIG. 2 comprises a flow diagram of process 200 to generate interpretable and statistically important features according to some embodiments. Process 200 and the other processes described herein may be performed using any suitable combination of hardware and software. Software program code embodying these processes may be stored by any non-transitory tangible medium, including a fixed disk, a volatile or non-volatile random access memory, a DVD, a Flash drive, or a magnetic tape, and executed by any one or more processing units, including but not limited to a microprocessor, a microprocessor core, and a microprocessor thread. Embodiments are not limited to the examples described below.

Initially, a plurality of interpretable features are determined at S210 based on columns of one or more database tables and a knowledge graph. It is assumed that each column includes rows of data values conforming to metadata defining the column (e.g., column name, data type). S210 may employ a reasoning algorithm to infer new features from a knowledge graph. Such a knowledge graph may include a large number of facts with various entities and relations that are organized in a Resource Description Framework (RDF) representation (i.e., as entity-relationship-entity triples).

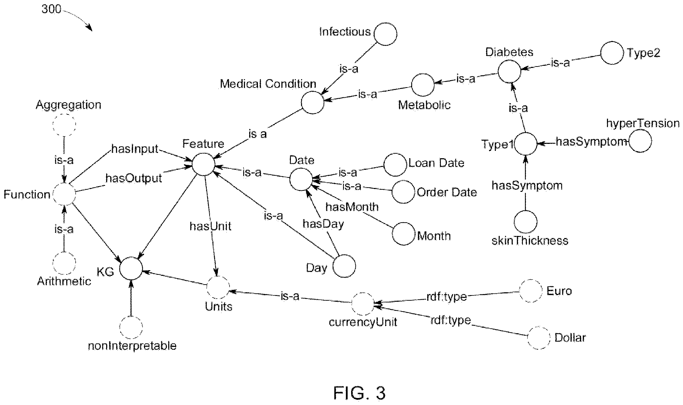

FIG. 3 illustrates logical entities of a portion of knowledge graph 300 according to some embodiments. Knowledge graph 300 includes two types of knowledge, domain-agnostic and domain-specific. Domain-agnostic knowledge is universal and independent of the domain of interest.

Dashed nodes represent classes associated with domain-agnostic knowledge. The class *Units* provides a broad range of measures and quantities for various application areas, such as the International System of Units (SI), Physics, Geometry, Mechanics, and others. The class *Function* defines the vocabulary and rules for semantically declaring and describing transformation functions, and the class *nonInterpretable* contains concepts that are considered as non-interpretable to domain experts. The class *nonInterpretable* includes rules that identify whether a generated feature may be non-interpretable (e.g., summing two features that have different units of measurement results in a non-interpretable feature, summing periodic inventory totals results in a non-interpretable feature).

Domain-specific knowledge is represented by the solid nodes of graph 300. The class *Feature* provides clear semantics of a large number of features that can be found in specific domain datasets, such as but not limited to Healthcare, Banking, Retail, E-commerce, and Finance. The class *Feature* includes categorical features (e.g., Gender, Location, Name, Address), and numerical features (e.g., Id, Date, Price, Income, Age, Amount), where Date can include transaction-date, order-date, purchase-date, etc. The domain-specific knowledge classes of knowledge graph 300 can be expanded to cover additional domains or additional knowledge of a domain using knowledge graph integration tools.

Knowledge graph 300 may be constructed using the Attributive Language (AL) of DL, in which information regarding concepts and features is stored in an RDF representation. DL refers to the class of logics that represents terminological knowledge. This class of logics is suited to represent domain rules since it is concerned with the properties of domain concepts and their interpretation. Moreover, DL is able to formalize the semantics of a domain and to perform reasoning such as subsumption reasoning using subsumption reasoning algorithms, such as structural algorithms and Tableaux algorithms (i.e., constraint propagation). Many DL languages exist, differing in their expressiveness and the complexity of the underlying reasoning algorithms.

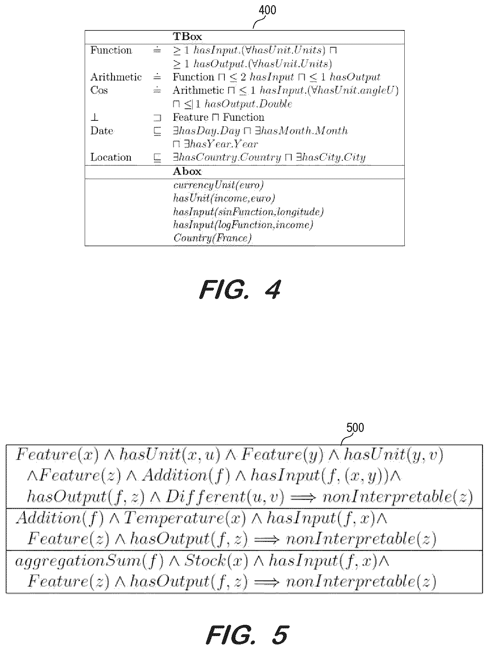

The classes of knowledge graph 300 form a TBox, an ABox and rules such as those depicted in table 400 and table 500 of FIGS. 4 and 5. For instance, the first axiom of the TBox of table 400 states that every function has at least one input and one output whose units are members of the class *Units.*

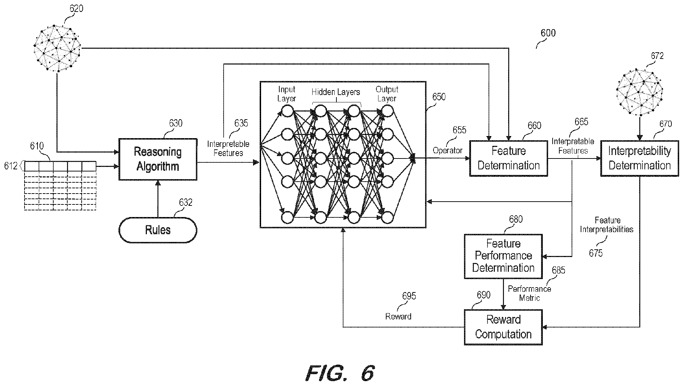

FIG. 6 is a detailed block diagram of architecture 600 to generate interpretable and statistically-important features according to some embodiments. Architecture 600 may comprise an implementation of architecture 100 of FIG. 1 but embodiments are not limited thereto.

Architecture 600 includes reasoning algorithm 630 to determine interpretable features 635 at S210. Any reasoning algorithm may be employed at S210, including but not limited to HermiT, which is a reasoner for knowledge bases written using the Web Ontology Language (OWL). OWL is designed to represent rich and complex knowledge about entities and the relations between them. The sub-language OWL-DL is based on DL language and may in some implementations offer a suitable trade-off between high expressiveness and computational completeness (i.e., all entailments are guaranteed to be computed) and decidability (i.e., all computations will finish in finite time).

Reasoning algorithm 630 may perform, based on knowledge graph 620, rule-based inference, classification and/or instance checking according to some embodiments. Since reasoning algorithm 630 generates the features based on rule-based logic and knowledge graph 620 of domain knowledge, the features are inherently interpretable.

Rule-based inference involves logical deductions by applying a set of predefined rules 632. For example, given the rule $A \sqsubseteq \exists R.\ C$, where $R$ is a role and $A$ and $C$ are concepts, if $A(x)$ is true, i.e., the individual $x$ belongs to $A$, then it can be inferred that $\exists t$ such that $C(t)$ and $R(x, t)$ are true.

In a specific example, the following rule is considered:

*Date* $\sqsubseteq \exists hasDay.Day \sqcap \exists hasMonth.Month$

*∃hasYear. Year*

If table 610 contains a date-type feature, *Date(f)*, then $(x, y, z)$ can be inferred such that the three features *hasDay* $(f,x)$, *hasMonth(f,y)* and *hasYear(f,z)* are generated, where *Day(x)*, *Month(y)* and *Year(z)*. Similarly, a feature *Energy* can be generated derive from a dataset with features *Velocity* and *Mass* and the rule:

*Energy* $\sqsubseteq \exists dependsOn.Mass \sqcap \exists dependsOn.\ V\ elocity$

Classification reasoning by reasoning algorithm 630 over knowledge graph 620 consists of determining whether $KB \vDash A \sqsubseteq B$ for each pair of atomic concepts $A, B$ occurring in the knowledge graph 620. The objective of such classification is to determine the concept within knowledge graph 620 which is most-specific to each feature 612.

Reasoning algorithm 630 may further use instance checking to reason over units of measurement ($KB \vDash Unit(x)$). Through instance checking, reasoning algorithm 630 can categorize units into suitable classes. For instance, if a new feature with unit $kg.mÂ^2/sÂ^2$ is generated by applying a series of transformations, reasoning algorithm 630 may classify it as an instance of *energy Unit, KB* $\vDash$ *energyUnit(kg. mÂ^2/sÂ^2))*, thereby indicating that the associated feature is an *energy* concept.

New features are generated based on the plurality of interpretable features at S220. According to some embodiments, a trainable network outputs a transformation, or operator, at S220 based on the input features. The transformation is then applied to the input interpretable features to generate new features at S220.

FIG. 6 illustrates deep reinforcement learning network agent 650 and feature determination component 660 to generate new features at S220 based on interpretable features 635 according to some embodiments. Agent 650 may model a Markovian Decision Process (MDP) according to some embodiments. MDP provides a mathematical framework for modeling decision making which comprises a finite or infinite set of states, $S = \{s_i\}$; a finite set of actions, $A = \{a_i\}$; a state transition function, $Tr (s, a, \acute{s})$, specifying the next state $\acute{s}$ given the current state s and action $a$; a reward function $r(s, a, \acute{s})$ specifying the reward given to the reinforcement learning agent for choosing an action $a$ in a state s and transitioning to a new state s'; and a policy $\pi : S \to A$ defining a mapping from states to actions.

Deep reinforcement learning network agent 650 may attempt to determine an action (i.e., operator) which maximizes an estimate of a long-term cumulative reward, defined as:

$$Q^*(s, a) = \max_{\pi} \mathrm{E}[r_t + \gamma r_{t+1} + \gamma^2 r_{t+2} + \ldots | s_t = s, a_t = a, \pi],$$

where function $Q^*$ represents the maximum sum of rewards $r_t$ discounted by factor $y$ at each time step. The Q-function may be induced by the deep reinforcement learning network and may be parameterized as $Q(s, a; \theta_i)$, where $\theta_i$ are the parameters (i.e., weights) of the network at training iteration $i$. Agent 650 receives the current state $S$ at S220 and, based on these parameters, outputs an expected cumulative reward, or Q-value, for each action $A$.

A state $s_i$ in the present example corresponds to a set of input features provided to agent 650 and the set of actions $A$ corresponds to a set of operators represented in the output layer of the deep reinforcement learning network (i.e., arithmetic and aggregation functions such as, for example, *Log, Square, Square Root, Product, ZScore, Aggregation (using Min, Max, Mean, Count, Std, mode, Sum), Temporal window aggregate, k-term frequency, Addition, Difference, Division, multiplication, Sin, Cos, TanH)*.

After calculating the Q-values for each action A, agent 650 may apply a decaying epsilon greedy algorithm to output either the operator (i.e., action) associated with a maximum reward or a random operator based on a certain input probability. The algorithm may consist of selecting the operator with the maximum expected return with a probability of $1 - \varepsilon$ and selecting a random operator with a probability of $\varepsilon$ over time, with the value of $\varepsilon$ decaying over time. Accordingly, as process 200 is executed, agent 650 initially learns by exploring its environment and $\varepsilon$ is gradually decreased to allow agent 650 to exploit its learned knowledge.

Feature determination component 660 uses the operator 655 output from agent 650 to generate a new set of interpretable features 665 based on the input set of features. Feature determination component 660 applies the operator to the input set of features to generate the new set of features. For example, given a prior input state of features a, b, c and operator *Square*, feature determination component 660 may generate features a, b, c, $a^2$, $b^2$, $c^2$.

According to some embodiments, feature determination component 660 identifies any non-interpretable features of the generated features using knowledge graph 620 and discards the non-interpretable features, i.e., $I_{KG}(f)$ = 0. To determine whether a feature $f$ is non-interpretable, feature determination component 660 checks for inconsistencies using subsumption (e. g., $KG \vDash f \subseteq nonInterpretable$?). If the evaluation is true, then $f$ contradicts a rules of knowledge graph 620 and is considered non-interpretable.

Returning to process 200, the interpretability of each new feature is determined based on a decomposition graph at S230. With respect to the FIG. 6 example, interpretability determination component 670 receives interpretable features 665 from feature determination component 660 and determines an interpretability 675 of each of features 665 based on logic and on decomposition graph 672. Decomposition graph 672 describes how features are generated, which transformations are used and their relationships with real-world entities.

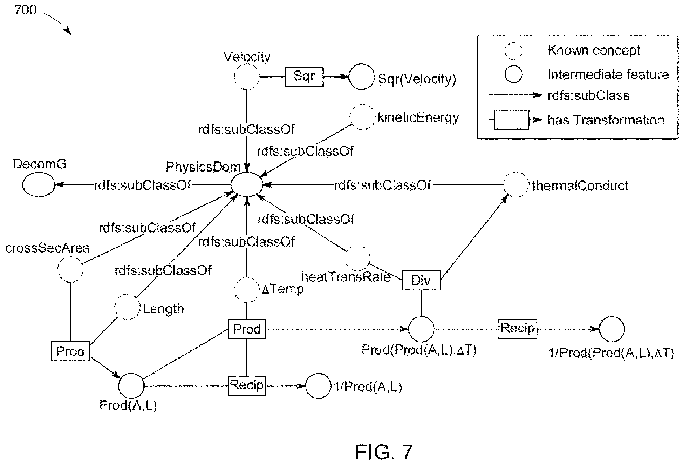

FIG. 7 illustrates a portion of decomposition graph 700 according to some embodiments. The dashed nodes of decomposition graph 700 represent known concepts in the domain and the solid nodes represent intermediate features generated to transition from one concept to another. The edges of graph 700 depict the transformations applied to a node to generate another node. Features associated with the white nodes have an interpretability equal to 1.

Interpretability determination component 670 may perform several steps to compute the interpretability of a target feature, denoted as $\tilde{f}$. First, all potential paths P = $\{p_i\}$ within decomposition graph 700 that directly link known concepts to target feature $\tilde{f}$ are identified. Next, the transformation functions T = $\{t_i\}$ applied along each path $p_i$ and the features $f_j$ on which they are applied are assessed, where $j \in \{1,2\}$, in order to determine how the known concepts are connected to $\tilde{f}$. For each $p_i \in P$, $I_{DG}^{p_i}(\tilde{f})$ depends on both the impact of the applied transformation $t_i$ on the cognitive effort required by domain experts to understand $\tilde{f}$, and the interpretability of any other features $f_j$ along $p_i$. $I_{DG}^{p_i}(\tilde{f})$ is calculated by recursively multiplying the interpretability of the transformation $t_i$, $Inter(t_i)$, and the interpretability of $f$, $I_{DG}(f_j)$. In the case of binary transformations, i.e., $j$ = 2, the interpretability is determined by the product of the interpretability of the transformation, $Inter(t_i)$, and the minimum interpretability score between its operands $f_1$ and $f_2$. Stated mathematically:

$$I_{DG}^{p_i}(\tilde{f}) = Inter(t_i) \times arg\,min_j\{I_{KG}(f_j)\}, j \in \{1,2\}$$

The interpretability of $\tilde{f}$ is then determined as the maximum interpretability score among all computed paths P = $\{p_i\}$:

$$I_{DG}(\tilde{f}) = arg\,max_{p_i \in P}\{I_{DG}^{p_i}\}$$

A specific example of interpretability determination is now provided with respect to decomposition graph 700. Thermal conductivity, $k = Q/(A\Delta TL)$, describes how well a material conducts heat, where $Q$ is the heat transfer rate, $A$ is the cross-sectional area, $\Delta T$ is the temperature difference, and $L$ is the length of the material. Each of these concepts is represented in decomposition graph 700.

In order to determine the interpetability of feature $X = A\Delta TL$, two paths from known concepts to $X$ are first identified: Path1: $(A, L, \Delta T) \rightarrow X$ and Path2:: $(Q, k) \rightarrow X$.

For Path 1 :

$$I_{DG}^{P_1}(X) = Inter(Prod) \times min\,\{I_{DG}(AL), I_{DG}(\Delta T)\}$$

$$= Inter(Prod) \times min\,\{Inter(Prod)\,\times min\,\{I_{DG}(A), I_{DG}(L), I_{DG}(\Delta T)\}$$

$$= Inter(Prod) \times I_{DG}(T)$$

For Path2:

$$I_{DG}^{P_2}(X)\quad = Inter(Div) \times min\{I_{DG}(Q), I_{DG}(k)\}$$
$$= Inter(Div) \times I_{DG}(Q) = Inter(Div) \times I_{DG}(k)$$

Accordingly, the overall interpretability of the feature Xis determined as:

$$I_{DG}(X) = \max\{I_{DG}^{P_1}(X), I_{DG}^{P_2}(X)\}$$

By breaking down the target feature based on graph paths and transformations applied, embodiments may provide domain experts with insights into the clarity and comprehensibility of a feature within a given context.

A reward is determined at S240 based on the interpretabilities determined at S230 and the statistical importance of the current set of features. The statistical importance may be determined based on the performance of a model which is trained using the current set of features. In one example of S240, feature performance determination component 680 of architecture 600 determines performance metric 685 of a model which is trained using features 665 output by feature determination component 660.

Feature performance determination component 680 may determine the performance of features 665 by training a machine learning model based on the set of features and evaluating the trained model (e.g., using test data) to determine one or more performance metrics of the trained model. The particular type and configuration (i.e., hyperparameters) of the machine learning model are selected in view of a particular desired inference, including but not limited to a regression (e.g., predicted profit based on features derived from a Sales database table) or a classification (e.g., predicted most-popular product configuration based on features derived from a Customer database table).

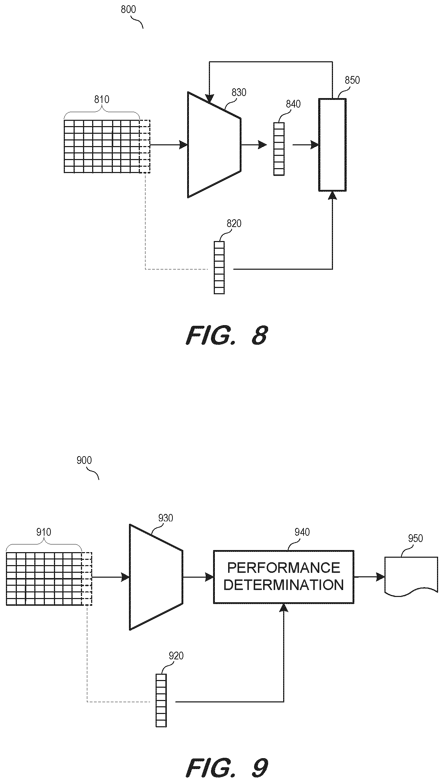

FIG. 8 illustrates training architecture 800 which may be used by feature performance determination component 680 in some embodiments. Model 830 may comprise a regression model implemented using a neural network, a set of linear equations, or in any other suitable manner to determine a Profit value, for example, based on a set of input features. Columns 810 include training data, where each of columns 810 includes values corresponding to one of features 665 received by feature performance determination component 680. For example, if the new state consists of features (a, b, c, $a^2$, $b^2$, $c^2$), columns 810 include a column of data values for each of features a, b, c as well as a column of data values for each of features $a^2$, $b^2$, $c^2$, where the data values of the latter columns are equal to the square of the data values of the corresponding former columns. Column 820 includes a ground truth value of the Profit target for each row of columns 810.

One training iteration according to some embodiments may include inputting a batch of records of columns 810 to model 830, operating model 830 to output resulting inferred values 840 for each record, operating loss layer 850 to evaluate a loss function based on output inferred values 840 and known ground truth data of column 820 and modifying model 830 based on the evaluation. Iterations may continue until a threshold number of iterations have been performed, for example.

The performance of thusly-trained network is then evaluated as a proxy for the statistical performance of the current set of features. Performance may be determined by calculating any one or more performance metrics based on the output of the trained network in response to input data and known ground truths associated with the input data. FIG. 9 illustrates system 900 to determine performance of a trained network according to some embodiments. Columns 910 include test data associated with the same features represented by columns 810 of training data. Column 920 includes ground truth data values (i.e., of a Profit target) associated with each row of columns 910.

Trained model 930 receives records of columns 910 and outputs an inferred value for each record to performance determination component 940. Performance determination component 940 compares the received values to corresponding values of column 920 to determine one or more performance metrics 950 (e.g., accuracy, precision, recall). Any one or more performance metrics may be used as a proxy for statistical performance of a set of features according to some embodiments.

A reward is determined at S240 based on the interpretability of the current set of features determined at S230 and on the statistical importance of these features. According to some embodiments, reward computation component 690 determines reward 695 based on feature interpretabilities 675 output by interpretability determination component 670 and performance metric 685 output by feature performance determination component 680.

The reward may be calculated as $r_t = \lambda(P_L^m(D_t) - P_L^m(D_{t-1})) + (1 - \lambda)I_{KG}(F_t)$, where $F_t$ is the feature set of $D_t$ and $\lambda$ is a programmable parameter which balances the relative contributions of feature interpretability and performance to the reward, and therefore to the determination of features by agent 650.

At S250, it is determined whether to end process 200. The determination may be based on, for example, whether the iterations of process 200 have converged, a threshold number of reward computation cycles, an amount of time elapsed, an amount of processing power used, and the meeting of interpretability and performance thresholds. Flow proceeds to S260 if it is not determined to end process 200. At S260, new features are generated based on the reward and the current set of features.

In some examples of S260, reward 695 is returned to agent 650, which generates a new operator 655 based on reward 695 and current features 665. Policy $\pi$: $S \rightarrow A$ determines the next operator 655 given the current set of features 665 to maximize the cumulative reward $Q^*(s, a)$. The goal is to obtain the best sequence of transformations of length $N$.

A feature engineering pipeline is defined as an ordered sequence ($a_1$, $a_1$, ...,$a_t$.., $a_N$) consisting of $N$ transformations. The i-th entry of the sequence denotes the decision in the i-th step. Two instances of a fully-connected multi-layer neural network may be used to approximate the Q-function. The first instance, parameterized as $Q(s, a; \theta_t)$, is the main

neural network that receives the current state (i.e., current features 665) and outputs an expected cumulative reward, $Q$-value, for each possible action. To stabilize the training process, a separate target instance $\hat{Q}(s, a; \hat{\theta}_t)$ may be used to estimate the target $Q$-values, $y_i$, during training. The separate instance is a copy of the first instance and is updated every $C$ steps.

A Q-learning update at iteration $t$ is defined as the loss function:

$$ Loss_t(\theta_t) = \mathbb{E}_{MB}[(r + \gamma \max_{a'} \hat{Q}(s_{t+1}, a'; \hat{\theta}_t) - Q(s_t, a_t; \theta_t))^2], $$

As mentioned above, agent 650 may employ a decaying ε-greedy strategy to select a next action, i.e., next operator 655. Feature determination component 660 uses the next operator 655 to generate a new set of features 665 based on the previous set of features 665 at S260. Flow then returns to S230 and continues as described above based on the new set of features 665.

Flow proceeds to S270 once it is determined at S250 to end process 200. At S270, the network is considered trained and may be output for future use as is known in the art. In particular, the trained network may be used to generate statistically-important and interpretable features based on a set of input features. The network may be used iteratively to generate additional statistically-important and interpretable features based on its output features and the original set of input features. The network may be output in the form of node weights, an executable algorithm, a set of linear equations, or any other suitable implementation of a trained network which may be used for inference.

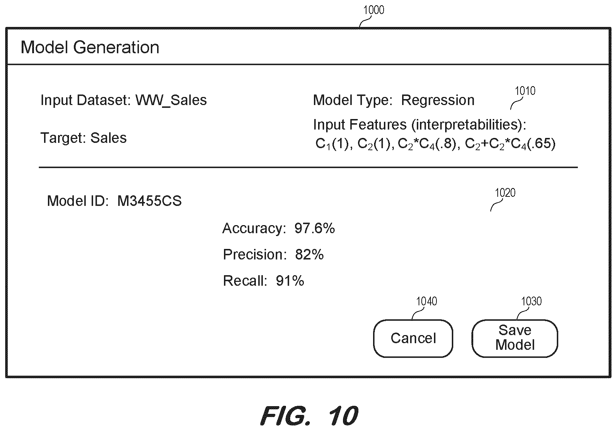

FIG. 10 illustrates interface 1000 presenting information associated with a model trained using features generated according to some embodiments. User interface 1000 may be presented by a user device executing a client application (e.g., a Web application) which provides definition and training of machine learning models.

User interface 1000 includes area 1010 presenting various configuration parameters of a trained model. The configuration parameters include an input dataset (e.g., an OLAP cube), a type of model (i.e., Regression), and a training target (i.e., Sales). Area 1010 also specifies a set of features which were generated as described above and the determined interpretabilities associated with each feature.

Area 1020 provides information regarding a model which has been trained based on the configuration parameters of area 1010. In the illustrated example, area 1020 specifies an identifier of the trained model and determined accuracy, precision and recall values. Embodiments are not limited to the information of area 1020. A user may review the information provided in area 1020 to determine whether to save the trained model for use in generating future inferences (e.g., via Save Model control 1030) or to discard the trained model (e.g., via Cancel control 1040).

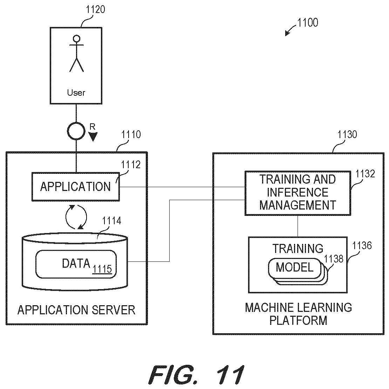

FIG. 11 illustrates system 1100 to provide model training to applications according to some embodiments. Application server 1110 may comprise an on-premise or cloud-based server providing an execution platform and services to applications such as application 1112. Application 1112 may comprise program code executable by a processing unit to provide functions to users such as user 1120 based on logic and on data 1115 stored in data store 1114. Data 1115 may be column-based, row-based, object data or any other type of data that is or becomes known. Data store 1114 may comprise any suitable storage system such as a database system, which may be partially or fully remote from application server 1110, and may be distributed as is known in the art.

According to some embodiments, user 1120 may interact with application 1112 (e.g., via a Web browser executing a client application associated with application 1112) to request a trained model based on data of data 1115. The data may comprise data aggregated across dimensions of an OLAP cube. In response to the request, application 1112 may call training and inference management component 1132 of machine learning platform 1130 to request training of a corresponding model according to some embodiments.

Based on the request, training, and inference management component 1132 may receive the specified data from data 1115 and instruct training component 1136 to train a model 1138 based on dimension-reduced training data as described herein. Application 1112 may then use the trained model to generate inferences based on input data selected by user 1120.

In some embodiments, application 1112 and training and inference management component 1132 may comprise a single system, and/or application server 1110 and machine learning platform 1130 may comprise a single system. In some embodiments, machine learning platform 1130 supports model training and inference for applications other than application 1112 and/or application servers other than application server 1110.

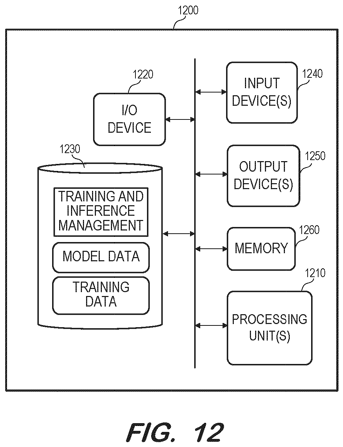

FIG. 12 is a block diagram of a hardware system providing model training according to some embodiments. Hardware system 1200 may comprise a general-purpose computing apparatus and may execute program code to perform any of the functions described herein. Hardware system 1200 may be implemented by a distributed cloud-based server and may comprise an implementation of machine learning platform 1130 in some embodiments. Hardware system 1200 may include other unshown elements according to some embodiments.

Hardware system 1200 includes processing unit(s) 1210 operatively coupled to I/O device 1220, data storage device 1230, one or more input devices 1240, one or more output devices 1250 and memory 1260. I/O device 1220 may facilitate communication with external devices, such as an external network, the cloud, or a data storage device. Input device(s) 1240 may comprise, for example, a keyboard, a keypad, a mouse or other pointing device, a microphone, knob, or a switch, an infra-red (IR) port, a docking station, and/or a touch screen. Input device(s) 1240 may be used, for example, to enter information into hardware system 1200. Output device(s) 1250 may comprise, for example, a display (e.g., a display screen) a speaker, and/or a printer.

Data storage device 1230 may comprise any appropriate persistent storage device, including combinations of magnetic storage devices (e.g., magnetic tape, hard disk drives and flash memory), optical storage devices, Read Only Memory (ROM) devices, and RAM devices, while memory 1260 may comprise a RAM device.

Data storage device 1230 stores program code executed by processing unit(s) 1210 to cause system 1200 to implement any of the components and execute any one or more of the processes described herein. Embodiments are not limited to execution of these processes by a single computing device. Data storage device 1230 may also store data and other program code for providing additional functionality and/or which are necessary for operation of hardware system 1200, such as device drivers, operating system files, etc.

The foregoing diagrams represent logical architectures for describing processes according to some embodiments, and actual implementations may include more, or different components arranged in other manners. Other topologies may be used in conjunction with other embodiments. Moreover, each component or device described herein may be implemented by any number of devices in communication via any number of other public and/or private networks. Two or more of such computing devices may be located remote from one another and may communicate with one another via any known manner of network(s) and/or a dedicated connection. Each component or device may comprise any number of hardware and/or software elements suitable to provide the functions described herein as well as any other functions. For example, any computing device used in an implementation some embodiments may include a processor to execute program code such that the computing device operates as described herein.

Embodiments described herein are solely for the purpose of illustration. Those in the art will recognize other embodiments may be practiced with modifications and alterations to that described above.

**Claims**

1. A system comprising:

   a memory storing program code; and
   at least one processing unit to execute the program code to cause the system to:

      generate a first set of features based on a second set of features and a learning network;
      determine an interpretability value for each of the first set of features;
      determine a performance of a model trained using the first set of features;
      determine a reward based on the performance and the interpretability values; and
      generate a third set of features based on the first set of features, the learning network, and the reward.

2. A system according to Claim 1, wherein determination of an interpretability value for each of the first set of features comprises:

   determination of an interpretability value for each of the first set of features using a decomposition graph; and optionally
   wherein determination of an interpretability value for one of the first set of features comprises:
   determination of one or more paths from a known concept of the decomposition graph to the one of the first set of features, each of the one or more paths comprising a respective transformation; and
   determination of the interpretability value for the one of the first set of features based on the one or more paths.

3. A system according to Claim 1 or 2, the at least one processing unit to execute the program code to cause the system to:
   generate the second set of features using a knowledge graph, wherein each of the second set of features is interpretable.

4. A system according to any of Claims 1 to 3, the at least one processing unit to execute the program code to cause the system to:

   determine an interpretability value for each of the third set of features;

determine a second performance of a second model trained using the third set of features;

determine a second reward based on the second performance and the interpretability values for each of the third set of features; and
generate a fourth set of features based on the third set of features, the learning network and the second reward; and optionally
wherein generation of the third set of features comprises:

determination of an operator based on the first set of features, the learning network, and the reward; and
application of the operator to the first set of features to generate the third set of features.

5.  A system according to any of Claims 1 to 4, wherein generation of the third set of features comprises:

determination of an operator based on the first set of features, the learning network, and the reward; and
application of the operator to the first set of features to generate the third set of features.

6.  A method comprising:

receiving a database table comprising a plurality of features;
generating a first set of interpretable features based on the plurality of features and a knowledge graph;
determining an interpretability value for each of the first set of interpretable features;
determining a performance of a model trained using the first set of interpretable features;
determining a reward based on the performance and the interpretability values; and
generating a second set of features based on the first set of features, a learning network, and the reward.

7.  A method according to Claim 6, wherein determining an interpretability value for each of the first set of interpretable features comprises:
determining an interpretability value for each of the first set of interpretable features using a decomposition graph; and optionally
wherein determining an interpretability value for one of the first set of interpretable features comprises:
determining one or more paths from a known concept of the decomposition graph to the one of the first set of features, each of the one or more paths comprising a respective transformation; and
determining the interpretability value for the one of the first set of features based on the one or more paths.

8.  A method according to Claim 6 or 7, wherein generating the first set of interpretable features based on the plurality of features and the knowledge graph comprises:

generating a third set of features based on the plurality of features and the knowledge graph;
inputting the third set of features to the learning network to determine an operator; and
generating the first set of interpretable features based on the third set of features and the operator.

9.  A method according to any of Claims 6 to 8, further comprising:

determining an interpretability value for each of the second set of features;
determining a second performance of a second model trained using the second set of features;

determining a second reward based on the second performance and the interpretability values for each of the second set of features; and
generating a third set of features based on the second set of features, the learning network and the second reward; and optionally
wherein generating the second set of features comprises:

determining an operator based on the first set of interpretable features, the learning network, and the reward; and
applying the operator to the first set of interpretable features to generate the second set of features.

10. A method according to any of Claims 6 to 9, wherein generating the second set of features comprises:

determining an operator based on the first set of interpretable features, the learning network, and the reward; and applying the operator to the first set of interpretable features to generate the second set of features.

11. A non-transitory medium storing program code executable by at least one processing unit of a computing system to cause the computing system to:
generate a first set of features based on a second set of features and a learning network;

determine an interpretability value for each of the first set of features;
determine a performance of a model trained using the first set of features;
determine a reward based on the performance and the interpretability values; and
generate a third set of features based on the first set of features, the learning network, and the reward.

12. A medium according to Claim 11, wherein determination of an interpretability value for each of the first set of features comprises:
determination of an interpretability value for each of the first set of features using a decomposition graph; and optionally
wherein determination of an interpretability value for one of the first set of features comprises:

determination of one or more paths from a known concept of the decomposition graph to the one of the first set of features, each of the one or more paths comprising a respective transformation; and
determination of the interpretability value for the one of the first set of features based on the one or more paths.

13. A medium according to Claim 11 or 12, the program code executable by at least one processing unit of a computing system to cause the computing system to:
generate the second set of features using a knowledge graph, wherein each of the second set of features is interpretable.

14. A medium according to any of Claims 11 to 13, the program code executable by at least one processing unit of a computing system to cause the computing system to:

determine an interpretability value for each of the third set of features;
determine a second performance of a second model trained using the third set of features;
determine a second reward based on the second performance and the interpretability values for each of the third set of features; and
generate a fourth set of features based on the third set of features, the learning network and the second reward.

15. A medium according to any of Claims 11 to 14, wherein generation of the third set of features comprises:

determination of an operator based on the first set of features, the learning network, and the reward; and
application of the operator to the first set of features to generate the third set of features.

**FIG. 1**

200

S210

DETERMINE A PLURALITY OF INTERPRETABLE
FEATURES BASED ON DATABASE TABLE
COLUMNS AND A KNOWLEDGE GRAPH

S220

GENERATE NEW FEATURES BASED ON THE
PLURALITY OF INTERPRETABLE FEATURES

S230

DETERMINE AN INTERPRETABILITY OF EACH NEW
FEATURE BASED ON A DECOMPOSITION GRAPH

S240

DETERMINE A REWARD BASED ON THE
INTERPRETABILITY AND STATISTICAL
IMPORTANCE OF THE NEW FEATURES

S270

OUTPUT TRAINED
NETWORK

S250

END?

Yes

No

S260

GENERATE NEW FEATURES BASED ON THE
CURRENT FEATURES AND THE REWARD

*FIG. 2*

FIG. 3

400

| TBox | | |
|---|---|---|
| Function | $\doteq$ | $\geq 1\ hasInput.(\forall hasUnit.Units) \sqcap$ <br> $\geq 1\ hasOutput.(\forall hasUnit.Units)$ |
| Arithmetic | $\doteq$ | Function $\sqcap\ \leq 2\ hasInput\ \sqcap\ \leq 1\ hasOutput$ |
| Cos | $\doteq$ | Arithmetic $\sqcap\ \leq 1\ hasInput.(\forall hasUnit.angleU)$ <br> $\sqcap\ \leq 1\ hasOutput.Double$ |
| $\bot$ | $\sqsupseteq$ | Feature $\sqcap$ Function |
| Date | $\sqsubseteq$ | $\exists hasDay.Day \sqcap \exists hasMonth.Month$ <br> $\sqcap\ \exists hasYear.Year$ |
| Location | $\sqsubseteq$ | $\exists hasCountry.Country \sqcap \exists hasCity.City$ |
| **Abox** | | |
| | | $currencyUnit(euro)$ <br> $hasUnit(income,euro)$ <br> $hasInput(sinFunction,longitude)$ <br> $hasInput(logFunction,income)$ <br> $Country(France)$ |

# FIG. 4

500

$$Feature(x) \wedge hasUnit(x,u) \wedge Feature(y) \wedge hasUnit(y,v)$$
$$\wedge Feature(z) \wedge Addition(f) \wedge hasInput(f,(x,y)) \wedge$$
$$hasOutput(f,z) \wedge Different(u,v) \Longrightarrow nonInterpretable(z)$$

$$Addition(f) \wedge Temperature(x) \wedge hasInput(f,x) \wedge$$
$$Feature(z) \wedge hasOutput(f,z) \Longrightarrow nonInterpretable(z)$$

$$aggregationSum(f) \wedge Stock(x) \wedge hasInput(f,x) \wedge$$
$$Feature(z) \wedge hasOutput(f,z) \Longrightarrow nonInterpretable(z)$$

# FIG. 5

FIG. 6

700

Velocity → Sqr → Sqr(Velocity)

kineticEnergy

rdfs:subClassOf

rdfs:subClassOf

DecomG ← rdfs:subClassOf ← PhysicsDom ← rdfs:subClassOf ← thermalConduct

rdfs:subClassOf

rdfs:subClassOf

crossSecArea

rdfs:subClassOf

rdfs:subClassOf

heatTransRate → Div

Length

ΔTemp

Prod

Prod → Prod(Prod(A,L),ΔT) → Recip → 1/Prod(Prod(A,L),ΔT)

Prod(A,L) → Recip → 1/Prod(A,L)

Known concept
Intermediate feature
rdfs:subClass
has Transformation

FIG. 7

18

*FIG. 8*

*FIG. 9*

| Model Generation | |
|---|---|
| Input Dataset: WW_Sales | Model Type:  Regression  1010 |
| Target: Sales | Input Features (interpretabilities):<br>$C_1(1)$, $C_2(1)$, $C_2*C_4(.8)$, $C_2+C_2*C_4(.65)$ |
| Model ID:  M3455CS | 1020 |
| Accuracy:  97.6%<br>Precision:  82%<br>Recall:  91% | |

1040  1030

Cancel   Save Model

## FIG. 10

FIG. 11

1200

1220
I/O
DEVICE

1240
INPUT
DEVICE(S)

1230
TRAINING AND
INFERENCE
MANAGEMENT

MODEL DATA

TRAINING
DATA

1250
OUTPUT
DEVICE(S)

1260
MEMORY

1210
PROCESSING
UNIT(S)

*FIG. 12*

Europäisches
Patentamt

European
Patent Office

Office européen
des brevets

## EUROPEAN SEARCH REPORT

**Application Number**

EP 24 21 9325

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN HAN ET AL: "Interpretable patent recommendation with knowledge graph and deep learning", SCIENTIFIC REPORTS, 14 February 2023 (2023-02-14), XP093271445, US ISSN: 2045-2322, DOI: 10.1038/s41598-023-28766-y Retrieved from the Internet: URL:https://www.nature.com/articles/s41598-023-28766-y.pdf [retrieved on 2025-04-18] Equation (11); * abstract; figures 1, 2 * * page 7 - page 10 * * section "Knowledge graph construction"; page 4 * | 1-15 | INV. G06N3/045 G06N3/092 G06N5/022 G06N5/045 G06N7/01 G06N20/00 |
| X,P | MOHAMED BOUADI ET AL: "Leveraging Knowlegde Graphs for Interpretable Feature Generation", ARXIV.ORG, CORNELL UNIVERSITY LIBRARY, 201 OLIN LIBRARY CORNELL UNIVERSITY ITHACA, NY 14853, 1 June 2024 (2024-06-01), XP091776531, * the whole document * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 23 April 2025 | Tidriri, Khaoula |

EPO FORM 1503 03.82 (P04C01)